Europäisches Patentamt

European Patent Office

Office européen des brevets

(19)

(11) Veröffentlichungsnummer: **0 134 916**
**B1**

(12) # EUROPÄISCHE PATENTSCHRIFT

(45) Veröffentlichungstag der Patentschrift:
23.09.87

(21) Anmeldenummer: 84106614.5

(22) Anmeldetag: 08.06.84

(51) Int. Cl.⁴: **C 04 B 35/52 //**
**C04B38/06**

(54) **Verfahren zur Herstellung eines schüttfähigen Kohlenstoffmaterials.**

(30) Priorität: 01.07.83 DE 3323801

(43) Veröffentlichungstag der Anmeldung:
27.03.85 Patentblatt 85/13

(45) Bekanntmachung des Hinweises auf die Patenterteilung:
23.09.87 Patentblatt 87/39

(84) Benannte Vertragsstaaten:
AT BE CH DE FR GB IT LI LU NL SE

(56) Entgegenhaltungen:
DE-A-2 104 680
DE-B-2 131 792

(73) Patentinhaber: C. CONRADTY NÜRNBERG GmbH
& Co. KG, Grünthal 1-6, D-8505 Röthenbach a.d.
Pegnitz (DE)

(72) Erfinder: Schieber, Franz, Finkengasse 94, D-8505
Röthenbach a.d. Pegnitz (DE)

(74) Vertreter: Kern, Wolfgang Dipl.- Ing.,
Patentanwälte Tischer, Kern & Brehm Albert-
Rosshaupter- Strasse 65, D-8000 München 70 (DE)

## Beschreibung

Die Erfindung betrifft ein Verfahren zur Herstellung eines schüttfähigen Kohlenstoffmaterials, insbesondere zum Füllen von Hohlräumen zwecks Wärmedämmung.

In Fällen, in denen hochporöse, leichte, kohlenstoffhaltige Materialien zum Füllen von Hohlräumen, insbesondere zum Zwecke der Wärmedämmung verwendet werden, beispielsweise für Hochtemperaturöfen, haben sich filz- oder vliesartige kohlenstoffhaltige Materialien nur bedingt bewährt, weil sie aufgrund der nicht vorhandenen Fließfähigkeit nicht in der Lage sind, in besonders enge und kompliziert geformte Hohlräume ohne aufwendiges Nachstopfen einzudringen und diese so auszufüllen, daß die gewünschte Wärmedämmung erzielt wird.

Andererseits sind die zum Zwecke der Wärmedämmung seit langem verwendeten Kohlenstoff- oder Graphitmaterialien in Granulatform oder Pulverform, die die gewünschte Fließfähigkeit besitzen, beispielsweise Ruß oder Koksmehl, insofern nachteilig, als sie bei der Einbringung in die für sie vorgesehenen Hohlräume oder Behältnisse einen erheblichen Arbeitsaufwand erfordern, um zu starke Verschmutzung und Staubbildung zu vermeiden.

Die Aufgabe der Erfindung besteht deshalb darin, ein Verfahren der genannten Art so auszubilden, daß mit ihm schüttfähige oder fließfähige Kohlenstoffmaterialien hergestellt werden können, die weniger verschmutzend sind, insbesondere weniger Staub entwickeln und sich auch einfacher handhaben lassen, wobei der verfahrenstechnische Aufwand zur Herstellung dieser Produkte, wenn überhaupt, dann nur unwesentlich größer sein soll als der für die obengenannten Produkte erforderliche Aufwand.

Diese Aufgabe wird erfindungsgemäß dadurch gelöst, daß Papierteilchen in Plättchenform mit einem mittleren Durchmesser von 0,5 bis 5 mm und einer mittleren Dicke von 0,01 bis 1 mm und/oder in Streifenform mit einer mittleren Länge von 5 bis 30 mm, einer mittleren Breite von 0,5 bis 10 mm und einer mittleren Dicke von 0,01 bis 1 mm, die einen Aschegehalt von 0,005 bis 5 % aufweisen, mit einem Bindemittel imprägniert und durch eine Temperaturbehandlung so carbonisiert werden, daß sie ein schüttfähiges Haufwerk mit einem Schüttgewicht von 30 bis 300 g/l bilden.

Erfindungsgemäß werden also Papierteilchen in Plättchenform oder Streifenform, jedoch auch Schnitzelform o.dgl., da der verwendete Begriff "Plättchenform" alle vergleichbaren ähnlichen Konfigurationen umfassen soll, welche von Hause aus schütt- bzw. fließfähig sind, mit einem kohlenstoffhaltigen Imprägniermittel behandelt und danach carbonisiert, so daß sie ihre Schütt- oder Fließfähigkeit behalten. Dieses so geschaffene teilchenförmige Kohlenstoffmaterial läßt sich bereits dadurch, daß es weniger Staub entwickelt, erheblich einfacher verarbeiten bzw. als Wärmedämmung verwenden, wobei sein außerordentlich niedriges Schüttgewicht ebenfalls erhebliche Vorteile bietet.

Darüberhinaus kann das aus Papier bestehende Ausgangsprodukt auch ein Abfallprodukt sein, das beispielsweise in der papierverarbeitenden Industrie anfällt.

Vorteilhafte Ausgestaltungen des erfindungsgemäßen Verfahrens sind in den Unteransprüchen gekennzeichnet. So lassen sich als Imprägniermittel beispielsweise kohlenstoffhaltige Flüssigkeiten verwenden, die bei der Carbonisierung einen Kohlenstoffrückstand von 5 bis 50 % ergeben. Auch ist die Möglichkeit gegeben, in den Fällen, in denen die mit dem Verfahren erzeugten carbonisierten bzw. graphitisierten Teilchen nicht der gewünschten Größe entsprechen, diese Teilchen nachträglich noch mit an sich bekannten Verkleinerungsapparaten zu zerkleinern. Das dabei entstehende Kornspektrum läßt sich durch bekannte Klassiermethoden in die gewünschten Fraktionen zerlegen.

Das Imprägnieren der Papierteilchen geschieht beispielsweise dadurch, daß diese mit einer Imprägniermittellösung, die z. B. eine 20 %ige methanolische Phenolformaldehydharzlösung sein kann, durch Eintauchen getränkt werden, so daß sich das teilchenförmige Haufwerk vollsaugt. Danach wird die überschüssige Imprägniermittellösung durch Abtropfen oder Abquetschen mittels Walzen, Pressen o.dgl. aus dem Haufwerk entfernt. Ein vergleichsweise geringer Teil der Imprägniermittellösung verbleibt so in und auf den Papierteilchen, aus dem das Lösungsmittel verdunstet. Die lufttrockenen Papierteilchen werden anschließend bei ca. 130°C einer Temperaturbehandlung unterworfen, wobei es zur Kondensation des Harzes kommt. Durch den letztgenannten Vorgang schrumpfen die Papierteilchen, wodurch sie sich voneinander lösen und bereits in diesem Stadium wieder ein fließfähiges Produkt bilden, das zum Zwecke der Carbonisierung einer an sich bekannten Glühbehandlung unterworfen wird, die beispielsweise in einer inerten Atmosphäre bei Temperaturen bis 1200°C stattfindet.

## Patentansprüche

1. Verfahren zur Herstellung eines schüttfähigen Kohlenstoffmaterials, insbesondere zum Füllen von Hohlräumen zwecks Wärmedämmung, dadurch gekennzeichnet, daß Papierteilchen in Plättchenform mit einem mittleren Durchmesser von 0,5 bis 5 mm und einer mittleren Dicke von 0,01 bis 1 mm und/oder in Streifenform mit einer mittleren Länge von 5 bis 30 mm, einer mittleren Breite von 0,5 bis 10 mm und einer mittleren Dicke von 0,01 bis 1 mm, die einen Aschegehalt von 0,005 bis 5 % aufweisen, mit einem Bindemittel imprägniert und durch Temperaturbehandlung so carbonisiert werden, daß sie ein schüttfähiges Haufwerk mit einem Schüttgewicht von 30 bis 300 g/l bilden.

2. Verfahren nach Anspruch 1, dadurch gekennzeichnet, daß die Temperaturbehandlung eine Graphitierung der imprägnierten Papierteilchen einschließt.

3. Verfahren nach Anspruch 1 oder 2, dadurch gekennzeichnet , daß als Imprägniermittel kohlenstoffhaltige Flüssigkeiten verwendet werden, die bei der Carbonisierung einen Kohlenstoffrückstand von 5 bis 50 % ergeben.

4. Verfahren nach einem der Ansprüche 1 bis 3, dadurch gekennzeichnet , daß die carbonisierten Papierteilchen wenigstens noch einmal mit einem kohlenstoffhaltigen Imprägniermittel imprägniert und erneut verkokt werden.

5. Verefahren nach einem der Ansprüche 1 bis 4, dadurch gekennzeichnet , daß die carbonisierten und/oder graphitierten Papierteilchen zu gewünschten Größen zerkleinert werden.

## Claims

1. A method for providing a flowable carbon material, especially for filling hollow spaces for the purposes of heat isolation, characterized by impregnating the paper particles in plate like form having an average diameter of from 0.5 to 5 mm and an average thickness of from 0.01 to 1 mm, and/or in strip form having an average length of from 5 to 30 mm, an average width of from 0.5 to 10 mm and an average thickness of from 0.01 to 1 mm, and an ash content of from 0.005 to 5 % by weight, with a binder and carbonizing the paper particles by temperature treatment so that they form a flowable heap having a bulk weight of from 30 to 300 g/l.

2. A method according to claim 1, characterized by said temperature treatment comprises graphitization of the impregnated paper particles.

3. A method according to claim 1 or 2, characterized in that as impregnating agent carbonaceous liquids are used providing upon carbonization a carbon residue of from 5 to 50 % per weight.

4. A method according to one of the claims 1 through 3, characterized in that the carbonized paper particles are at least impregnated a second time with a carbonaceous impregnating agent and then carbonized a second time.

5. A method according to one of the claims 1 through 4, characterized in that the carbonized and/or graphitized paper particles are comminuted to requested sizes.

## Revendications

1. Procédé de fabrication d'un matériau en carbone pouvant être versé, destiné en particulier au remplissage des espaces creux à des fins d'isolation thermique, caractérisé en ce que les pastilles de papier d'un diamètre moyen de 0,5 à 5 mm et d'une épaisseur moyenne de 0,01 à 1 mm, et/ou des bandelettes de papier d'une longueur de 5 à 30 mm, d'une largeur moyenne de 0,5 à 10 mm et d'une épaisseur moyenne de 0,005 à 5 %, sont imprégnées à l'aide d'un liant et carbonisées par un traitement thermique de telle manière qu'elles forment une masse versable dont la densité apparente est comprise entre 30 et 300g/l.

2. Procédé suivant la revendication 1, caractérisé en ce que le traitement thermique comprend une graphitisation des fragments de papier imprégnés.

3. Procédé suivant les revendications 1 ou 2, caractérisé en ce que l'on utilise pour l'imprégnation des liquides contenant du carbone, qui produisent à la carbonisation un résidu de carbone de 5 à 50 %.

4. Procédé suivant l'une des revendications 1 à 3, caractérisé en ce que les fragments de papier carbonisés sont au moins imprégnés d'un agent de saturation contenant du carbone et cokéfiés au moins une deuxième fois.

5. Procédé suivant l'une des revendications 1 à 4, caractérisé en ce que les fragments de papier carbonisés et/ou graphitisés sont réduits à la taille voulue.